(19) Europäisches Patentamt
European Patent Office
Office européen des brevets

(11) **EP 4 336 621 B1**

(12) **EUROPEAN PATENT SPECIFICATION**

(45) Date of publication and mention
of the grant of the patent:
**08.04.2026  Bulletin 2026/15**

(21) Application number: **22919100.2**

(22) Date of filing: **29.12.2022**

(51) International Patent Classification (IPC):
*H01M 10/44* (2006.01)    *H01M 10/42* (2006.01)
*H02J 7/00* (2026.01)    *G05B 11/42* (2006.01)
*H01M 10/48* (2006.01)

(52) Cooperative Patent Classification (CPC):
**H01M 10/441; H01M 10/443; H01M 10/482;
H01M 10/486; H02J 7/82; H02J 7/96; H02J 7/977;**
H02J 7/50; Y02E 60/10

(86) International application number:
**PCT/KR2022/021601**

(87) International publication number:
**WO 2023/132563 (13.07.2023 Gazette 2023/28)**

(54) **CHARGING CONTROL METHOD OF BATTERY PACK AND BATTERY SYSTEM USING THE SAME**

LADESTEUERUNGSVERFAHREN FÜR BATTERIEPACK UND BATTERIESYSTEM DAMIT

PROCÉDÉ DE COMMANDE DE CHARGE DE BLOC-BATTERIE, ET SYSTÈME DE BATTERIE L'UTILISANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **06.01.2022  KR 20220002136**

(43) Date of publication of application:
**13.03.2024  Bulletin 2024/11**

(73) Proprietor: **LG Energy Solution, Ltd.
Seoul 07335 (KR)**

(72) Inventors:
• **YEOM, Incheol
Daejeon 34122 (KR)**
• **KIM, Nari
Daejeon 34122 (KR)**
• **IN, Jeonghyeon
Daejeon 34122 (KR)**

(74) Representative: **Plasseraud IP
104 Rue de Richelieu
CS92104
75080 Paris Cedex 02 (FR)**

(56) References cited:
CN-A- 112 234 661      JP-A- 2012 047 580
JP-A- 2013 130 448     JP-A- 2020 119 694
KR-A- 20180 056 238    KR-A- 20180 058 493
US-A1- 2009 104 510    US-A1- 2020 287 390
US-A1- 2020 373 779

**Description**

**[Technical Field]**

The present disclosure relates to a charging control method of a battery pack and a battery system using the same.

**[Background Art]**

Existing fast charging methods operate based on a rapid charging map composed of fixed C-rates according to an SOC and a temperature. For example, a battery management system (BMS) receives a target SOC and a current temperature as initial conditions, and determines a C-rate corresponding to the initial conditions on a rapid charging map. The BMS transmits the determined C-rate value to the vehicle or a cycler, and the vehicle or cycler performs the rapid charging by applying the current to the battery cell or the module according to the transmitted C-rate. A drawback of this method is that the effect caused by the degeneration of the cell cannot be considered in the rapid charging process. In general, when the cell degenerates, since an internal resistance increases, a larger voltage is output at the same SOC compared to the initial production time. Due to this, the cell voltage may exceed an upper limit voltage that should not be exceeded during the rapid charging process. The upper limit voltage may be different depending on the SOC level.

The phenomenon of exceeding the upper limit voltage due to the cell degeneration continues to occur as the number of the rapid charging cycles is repeated, which has a negative effect of further accelerating the cell degeneration. When the cell voltage exceeding the upper limit voltage occurs, there is an improvement method to reduce the current magnitude to a certain ratio. However, since it is impossible to predict the voltage change due to the cell degeneration due to various factors, a method of reducing the current magnitude to a constant ratio is not effective.

Examples and embodiments from prior art are disclosed in the documents US 2020/287390 A1, US 2009/104510 A1, US 2020/373779 A1, and CN 112 234 661 A.

**[Disclosure]**

[Technical Problem]

The present disclosure is intended to provide a charging control method for a battery pack that may prevent the phenomenon of exceeding the upper limit voltage due to the cell degeneration in advance while maintaining the rapid charging speed as much as possible.

[Technical Solution]

A battery system may include: a battery pack including a plurality of battery cells; and a battery management system configured to derive a charging rate based on a charging target SOC (State of Charge) for the battery pack and the battery pack temperature, and compensate for the charging rate through PID control based on an error voltage between any one of the plurality of cell voltages and an open circuit voltage (OCV) corresponding to the charging target SOC to generate a compensation charging rate.

The battery management system may generate a proportional value, an integral value, and a differential value based on the error voltage to derive a PID value, and multiplies the charging rate by the PID value to generate the compensation charging rate.

The battery management system may derive the PID value by adding the proportional value, the integral value, and the differential value.

The battery management system may include a charging rate map in which a charging rate corresponding to each temperature of a plurality of battery packs is defined for each of a plurality of charging targets SOCs, and receives the charging target SOC and the battery pack temperature, and derives the charging rate corresponding to the received charging target SOC and battery pack temperature from the charging rate map.

The battery management system may generate the OCV corresponding to the charging target SOC by using an SOC to OCV conversion function.

The battery management system may generate the error voltage by subtracting the highest cell voltage among the plurality of cell voltages from the OCV.

In the plurality of battery cells, when battery cell groups in which battery cells are connected in parallel with p are connected in series with s, the battery management system may generate a modulation charging rate by multiplying the compensation charging rate by p.

A charging control method of a battery pack including a plurality of battery cells controlled by a battery management system, may include: deriving a charging rate based on a charging target State of Charge (SOC) for the battery pack and a battery pack temperature; generating an error voltage between any one of the plurality of cell voltages and an open circuit voltage (OCV) corresponding to the charging target SOC; and generating a compensation charging rate by compensating for the charging rate through PID control based on the error voltage.

The generating of the compensation charging rate may include: generating a proportional value, an integral value, and a differential value based on the error voltage; deriving a PID value by adding the proportional value, the integral value, and the differential value; and multiplying the charging rate by the PID value to generate the compensation charging rate.

The deriving of the charging rate may include: receiving the charging target SOC and the battery pack temperature; and deriving the charging rate corresponding to the received charging target SOC and battery pack temperature from a charging rate map.

The charging control method of the battery pack may further include generating the OCV corresponding to the charging target SOC by using an SOC to OCV conversion function.

The generating of the error voltage may include generating the error voltage by subtracting the highest cell voltage among the plurality of cell voltages from the OCV.

The charging control method of the battery pack may further include, in the plurality of battery cells, when battery cell groups in which battery cells are connected in parallel with p are connected in series with s, generating a modulation charging rate by multiplying the compensation charging rate by p.

[Advantageous Effects]

The present disclosure provides the method for controlling the charging of the battery pack, and the battery system using the method so that the cell voltage does not exceed the upper limit voltage.

**[Description of the Drawings]**

FIG. 1 is a view showing a battery system according to an embodiment.
FIG. 2 is a block diagram showing some components of a BMS according to an embodiment.
FIG. 3 is a flowchart showing an operation of a BMS according to an embodiment.
FIG. 4 is a block diagram showing a configuration of a BMS according to an embodiment.
FIG. 5 is a circuit diagram showing a battery pack according to an embodiment.

**[Mode for Invention]**

An embodiment of the present disclosure may control a charging speed through PID control based on a charging target SOC and a cell voltage in order to prevent a cell from exceeding an upper limit voltage during charging. The PID control applied to an embodiment is a well-known control method, but by being applied to an embodiment, a heterogeneous effect capable of preventing an upper limit voltage exceeding phenomenon of a cell during the charging may be provided. The PID (Proportional-Integral-Differential) control is a form of negative feedback control, which measures an output value of a controlled object, compares it with a reference value based on a control target to calculate an error, and uses a proportional term, an integral term, and a differential term by this error value, so that a control value (hereinafter, a PID value) required to control a control target may be calculated. In an embodiment, the output value may be a cell voltage, the reference value may be an OCV (Open Circuit Voltage) corresponding to the charging target SOC, and the PID value may be a weight value multiplied by a charging speed. The proportional term may be a value proportional to the magnitude of the error value in the current state, the integral term may eliminate a steady-state error, and the differential term may reduce an overshoot and improve stability by braking sudden changes in the output value.

The charging speed may be expressed as a charging rate (C-rate) hereinafter. The charging rate (C-rate) means a magnitude of a charging current ([A]) or a discharging current ([A]) for a rated capacity of the battery when charging or discharging, and "C" is used for the "unit" of the C-rate. This is expressed as Equation 1 below. As seen from Equation 1, the unit of the rated capacity of the battery is not considered in the C-rate.

C-rate = (charging or discharging current) [A] / (rated capacity of battery)       [Equation 1]

Terms including an ordinary number, such as first and second, are used for describing various constituent factors, but the constituent factors are not limited by the terms. The terms are used only to discriminate one constituent factor from another constituent factor.

In the present application, it will be appreciated that terms "including" and "having" are intended to designate the existence of characteristics, numbers, steps, operations, constituent factors, and components described in the specification or a combination thereof, and do not exclude a possibility of the existence or addition of one or more other characteristics, numbers, steps, operations, constituent factors, and components, or a combination thereof in advance.

A program implemented as a set of instructions embodying a control algorithm necessary to control another configuration may be installed in a configuration for controlling another configuration under a specific control condition among configurations according to an embodiment. The control configuration may process input data and stored data, based on the installed program to generate output data. The control configuration may include a nonvolatile memory storing the program and a memory storing the data.

Hereinafter, a charging control method of a battery pack and a battery system using the same according to an embodiment will be described with reference to drawings.

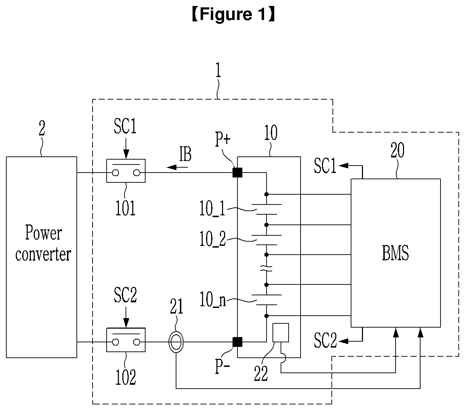

FIG. 1 is a view showing a battery system according to an embodiment.

As shown in FIG. 1, a battery system 1 is connected to a power converter 2.

The power converter 2 may supply power supplied from the battery pack 10 by the discharge of the battery pack 10 to an external load (e.g., a motor that provides driving power to an electric vehicle). Electric vehicles include vehicles driven only by a motor without an internal combustion engine and hybrid vehicles that include both an internal combustion engine and a motor.

The power converter 2 may supply the power for charging the battery pack 10 from an external commercial power source. The power converter 2 may be a charging and discharging device for testing battery performance like a CYCLER. As such, the power converter 2 may be a device that transfers the power from the battery pack 10 to the outside or from the outside to the battery pack 10 according to the discharging or charging of the battery pack 10.

The battery system 1 includes a battery pack 10, a BMS 20, and first and second contactors 101 and 102.

The first contactor 101 is connected between a positive electrode (P+) of the battery pack 10 and the power converter 40, and is switched under the control of the BMS 20. The second contactor 102 is connected between the negative electrode (P-) of the battery pack 10 and the power converter 2, and is switched under the control of the BMS 20. The BMS 20 may generate and supply switching signals SC1 and SC2 that control the switching operations of the first and second contactors 101 and 102 to the first and second contactors 101 and 102.

The battery pack 10 includes a plurality of battery cells 10_1 to 10_n (n is two or more natural numbers) connected in series.

The BMS 20 is connected to both terminals of each of a plurality of battery cells 10_1 to 10_n. The BMS 20 may measure the cell voltage of each of a plurality of battery cells 10_1 to 10_n at each monitoring period, and may measure the current (hereinafter, a battery pack current) and temperature (hereinafter, a battery pack temperature) of the battery pack 10. The temperature of a plurality of battery cells 10_1 to 10_n may follow the battery pack temperature. However, the disclosure is not limited thereto, and a plurality of temperature sensors may be disposed in the battery pack 10, and the BMS 20 may estimate the temperature for each of a plurality of battery cells 10_1 to 10_n based on temperature information obtained from a plurality of temperature sensors. Hereinafter, in the description, the battery pack temperature may be replaced with the battery cell temperature.

The current sensor 21 may measure the battery pack current IB and transmit the information about the measured battery pack current to the BMS 20.

The temperature sensor 22 may measure the battery pack temperature and transmit the information about the measured battery pack temperature to the BMS 20.

The BMS 20 may control and perform cell balancing for a plurality of battery cells 10_1 to 10_n based on a plurality of cell voltages. The BMS 20 may estimate an SOC (State of Charge), an SOH (State of Health), an SOP (State of Power), etc. based on a plurality of cell voltages of a plurality of battery cells 10_1 to 10_n and the measured information (the battery pack current, the battery pack temperature, etc.) of the battery pack 10.

The BMS 20 may determine a charging rate based on the charging target SOC for the battery pack 10, a plurality of cell voltages, and the battery pack temperature. The charging target SOC may be transmitted to the BMS 20 through CAN communication from an electronic control circuit that controls the electric vehicle when the battery system 1 is installed in the electric vehicle. Alternatively, the user may transmit the charging target SOC to the BMS 20 through the interface for the battery performance test.

The BMS 20 may include a map (hereinafter, a charging rate map) in which the charging rate is set based on the charging target SOC and the battery pack temperature. In the charging rate map, a charging rate according to each of a plurality of battery pack temperatures is defined for each of a plurality of charging targets SOC. The BMS 20 may derive a target OCV corresponding to the charging target SOC. The BMS 20 generates an error voltage, which is the difference between the target OCV and one of a plurality of cell voltages, for each monitoring period, derives a **PID** value based on the error voltage for each monitoring period, and multiplies the derived **PID** value by the charging rate determined based on the charging target SOC and the battery pack temperature to generate a compensating charging rate.

The BMS 20 transmits the compensation charging rate to the power converter 2. The power converter 2 may supply the power to the battery pack 10 according to the compensation charging rate. The BMS 20 may repeat the **PID** value derivation and the compensation charging rate generation described above for each monitoring period.

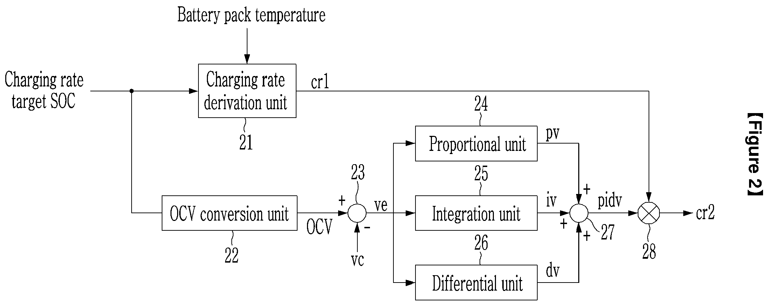

FIG. 2 is a block diagram showing some components of a BMS according to an embodiment.

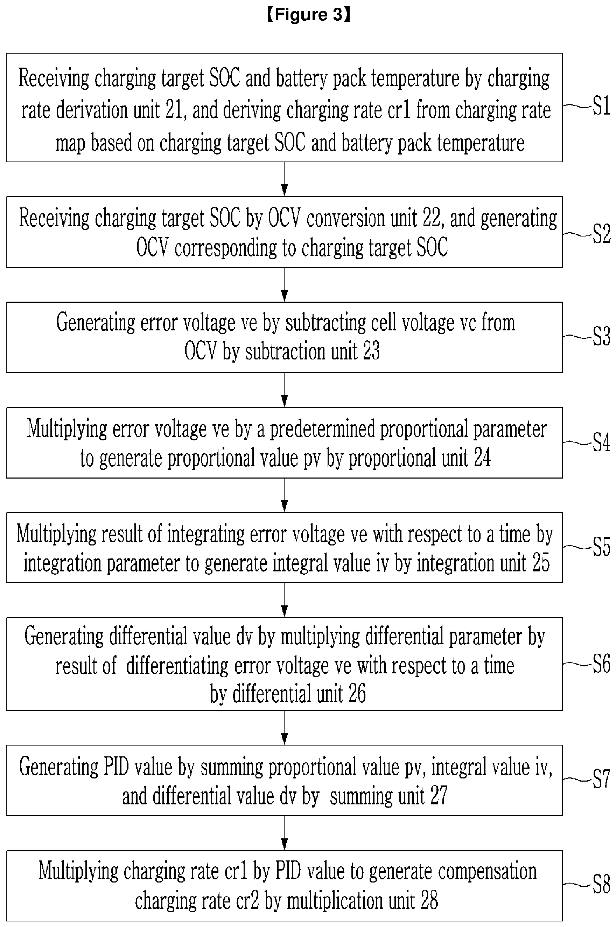

FIG. 3 is a flowchart showing an operation of a BMS according to an embodiment.

FIG. 2 shows, as configurations of the BMS 20, only configurations necessary to generate the compensation charging rate by deriving the PID value.

The BMS 20 may include a charging rate derivation unit 21, an OCV conversion unit 22, a subtraction unit 23, a proportional unit 24, an integration unit 25, a differential unit 26, a summing unit 27, and a multiplication unit 28. Each of the components 21 to 28 constituting the BMS 20 is a module to perform a corresponding function, and a program including control instructions for performing the corresponding function may be installed in the corresponding module. Each of the charging rate derivation unit 21, the OCV conversion unit 22, the subtraction unit 23, the proportional unit 24, the integration unit 25, the differential unit 26, the summing unit 27, and the multiplication unit 28 may operate according to the installed program and generate the output according to the input.

The charging rate derivation unit 21 stores the charging rate map. The charging rate derivation unit 21 receives the charging target SOC and the battery pack temperature, and derives the charging rate cr1 from the charging rate map based on the charging target SOC and the battery pack temperature (S1).

The OCV conversion unit 22 includes a program that implements a SOC to OCV conversion function, and upon receiving the charging target SOC, it may generate the OCV corresponding to the charging target SOC using the program (S2).

The subtraction unit 23 may generate an error voltage ve by subtracting the cell voltage vc from the OCV (S3). The cell voltage vc may be a cell voltage (hereinafter, a highest cell voltage) that is highest among a plurality of cell voltages. There may be a difference between a plurality of cell voltages, and when the PID value is derived based on the lower cell voltage than the highest cell voltage among a plurality of cell voltages, overcharging may occur for the cell having the highest cell voltage. This may cause the cell voltage of the corresponding cell to become the overvoltage.

The proportional unit 24, the integration unit 25, and the differential unit 26 for deriving the PID value may receive the error voltage ve for each monitoring period. The proportional parameter, the integral parameter, and the differential parameter for deriving the PID value may be set through tuning using an experimental method.

The proportional unit 24 multiplies the error voltage ve by a predetermined proportional parameter to generate a proportional value pv (S4).

The integration unit 25 multiplies the result of integrating the error voltage ve with respect to time by the integration parameter to generate an integral value iv (S5). In this case, the integration period may be a period between the previous monitoring time point and the current monitoring time point, that is, a monitoring cycle. That is, the integration unit 25 may generate an integral value iv by multiplying an integral parameter by the result obtained by multiplying the error voltage ve by the monitoring cycle.

The differential unit 26 generates a differential value dv by multiplying the differential parameter by the result of differentiating the error voltage ve with respect to time (S6). At this time, the differential period may also be a monitoring cycle. That is, the differential unit 26 may generate a differential value dv by multiplying a value obtained by dividing a value obtained by subtracting the error voltage at the previous monitoring time point from the error voltage ve at the current monitoring time point by a monitoring cycle by a differential parameter.

The summing unit 27 generates the PID value by summing the proportional value pv, the integral value iv, and the differential value dv (S7).

The multiplication unit 28 multiplies the charging rate cr1 by the PID value to generate the compensation charging rate cr2 (S8).

The BMS 20 may transmit the compensation charging rate cr2 to the power converter 2, and the power converter 2 may charge the battery pack 10 with a charging current depending on the compensation charging rate cr2.

The BMS 20 may perform the above-described operation by measuring the cell voltages of a plurality of battery cells 10_1 to 10_n in the next monitoring cycle and deriving the highest cell voltage among a plurality of cell voltages. In this way, the BMS 20 may generate the compensation charging rate based on the highest cell voltage for each monitoring cycle. However, the present invention is not limited thereto, and the compensation charging rate may be generated for every predetermined integer multiple of the monitoring cycle.

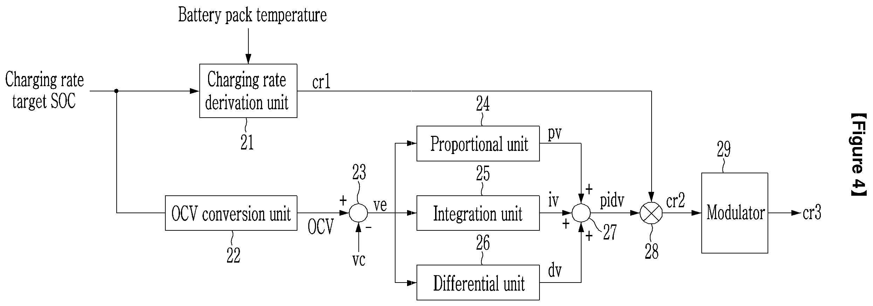

FIG. 4 is a block diagram showing a configuration of a BMS according to an embodiment.

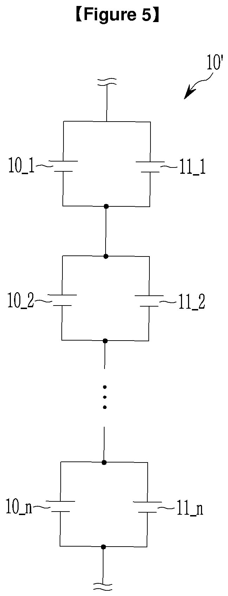

FIG. 5 is a circuit diagram showing a battery pack according to an embodiment.

Among the contents shown in FIG. 4, the contents overlapping with those shown in FIG. 2 are omitted.

As shown in FIG. 4, the BMS 20 further includes a modulator 29 compared to the preceding embodiment. The modulator 29 may modulate the compensation charging rate according to the structure of a plurality of battery cells constituting the battery pack 10.

For example, FIG. 1 shows that a plurality of battery cells 10_1 to 10_n are connected in series, but the battery pack 10' shown in FIG. 5 may include the battery cells connected in parallel to each of a plurality of battery cells 10_1 to 10_n. One of a plurality of battery cells 10_1 to 10_n and one of a plurality of battery cells 11_1 to 11_n are connected in parallel to form a battery cell group, and the plurality of battery cell groups that are connected in parallel are connected in series. FIG. 5 is an example of a case where battery cell groups in which battery cells are connected in parallel with p are connected in series with s (p and s are natural numbers of 2 or more).

In the battery pack 10' shown in FIG. 5, since two battery cells are connected in parallel, the charging current is divided into two paths and flows to each cell. Therefore, the compensation charging rate should be doubled. The modulator 29 may generate a modulation charging rate cr3 obtained by multiplying the compensation charging rate cr2 by a proportional constant 2 considering two current paths in parallel. The modulator 29 may determine a proportional constant value according to the number of battery cells connected in parallel, that is, p. For example, when the number of battery cells connected in parallel is 3, the proportional constant may be 3.

The BMS 20 may transmits the modulated charging rate cr3 to the power converter 2, and the power converter 2 may charge the battery pack 10 with the charging current according to the modulated charging rate cr3.

The conventional rapid charging method proceeds with the charging at a constant C-Rate, but reduces the current when the cell voltage exceeds the upper limit voltage. In contrast, the charging method according to an embodiment converts the charging target SOC to the OCV, sets the upper limit voltage in the charging for the charging target SOC, and controls the PID based on the error voltage between a plurality of battery cell voltages and the OCV, thereby it is possible to prevent the cell voltage from exceeding the upper limit voltage.

**Claims**

1. A battery system (1) comprising:

    a battery pack (10) including a plurality of battery cells (10_1;10_n); and
    a battery management system (20) **characterised in that** it is configured to derive a charging rate based on a charging target SOC (State of Charge) for the battery pack and the battery pack temperature, compensate the charging rate through PID control based on an error voltage between any one of the plurality of cell voltages and an open circuit voltage (OCV) corresponding to the charging target SOC to generate a compensation charging rate.

2. The battery system of claim 1, wherein
the battery management system is configured to generate a proportional value, an integral value, and a differential value based on the error voltage to derive a PID value, and multiply the charging rate by the PID value to generate the compensation charging rate.

3. The battery system of claim 2, wherein
the battery management system is configured to derive the PID value by adding the proportional value, the integral value, and the differential value.

4. The battery system of claim 1, wherein

    the battery management system includes a charging rate map in which a charging rate corresponding to each temperature of a plurality of battery packs is defined for each of a plurality of charging targets SOCs, and
    is configured to receive the charging target SOCs and the battery pack temperature, and derive the charging rate corresponding to the received charging target SOCs and battery pack temperature from the charging rate map.

5. The battery system of claim 1, wherein
the battery management system is configured to generate the OCV corresponding to the charging target SOC by using an SOC to OCV conversion function.

6. The battery system of claim 1, wherein
the battery management system is configured to generate the error voltage by subtracting the highest cell voltage among the plurality of cell voltages from the OCV.

7. The battery system of claim 1, wherein

    in the plurality of battery cells, when battery cell groups in which battery cells are connected in parallel with p are connected in series with s,
the battery management system is configured to generate a modulation charging rate by multiplying the compensation charging rate by p.

8. A charging control method of the battery system of claim 1, **characterized in that** the method comprises:

Deriving (S1) a charging rate based on a charging target State of Charge (SOC) for the battery pack and a battery pack temperature;
generating (S2) an error voltage between any one of the plurality of cell voltages and an open circuit voltage (OCV) corresponding to the charging target SOC; and
generating (S8) a compensation charging rate by compensating for the charging rate through PID control based on the error voltage.

9. The charging control method of the battery pack of claim 8, wherein
the generating of the compensation charging rate includes:

generating a proportional value, an integral value, and a differential value based on the error voltage;
deriving a PID value by adding the proportional value, the integral value, and the differential value; and
multiplying the charging rate by the PID value to generate the compensation charging rate.

10. The charging control method of the battery pack of claim 8, wherein
the deriving of the charging rate includes:

receiving the charging target SOC and the battery pack temperature; and
deriving the charging rate corresponding to the received charging target SOC and battery pack temperature from a charging rate map.

11. The charging control method of the battery pack of claim 8, further comprising
generating the OCV corresponding to the charging target SOC by using an SOC to OCV conversion function.

12. The charging control method of the battery pack of claim 8, wherein

the generating of the error voltage includes
generating the error voltage by subtracting the highest cell voltage among the plurality of cell voltages from the OCV.

13. The charging control method of the battery pack of claim 8, further comprising,

in the plurality of battery cells, when battery cell groups in which battery cells are connected in parallel with p are connected in series with s,
generating a modulation charging rate by multiplying the compensation charging rate by p.

**Patentansprüche**

1. Batteriesystem (1), umfassend:

einen Batteriepack (10), welcher eine Mehrzahl von Batteriezellen (10_1-10_n) umfasst; und
ein Batteriemanagementsystem (20), **dadurch gekennzeichnet, dass** es dazu eingerichtet ist, eine Laderate auf der Grundlage eines Ladeziel-SOCs (State of Charge) für den Batteriepack und der Batteriepack-Temperatur abzuleiten, die Laderate mittels PID-Steuerung auf der Grundlage einer Fehlerspannung zwischen einer der Mehrzahl von Zellspannungen und einer Leerlaufspannung (OCV) zu kompensieren, welche dem Ladeziel-SOC entspricht, um eine Kompensations-Laderate zu generieren.

2. Batteriesystem nach Anspruch 1, wobei
das Batteriemanagementsystem dazu eingerichtet ist, einen Proportionalwert, einen Integralwert und einen Differentialwert auf der Grundlage der Fehlerspannung zu generieren, um einen PID-Wert abzuleiten, und die Laderate mit dem PID-Wert zu multiplizieren, um die Kompensations-Laderate zu generieren.

3. Batteriesystem nach Anspruch 2, wobei
das Batteriemanagementsystem dazu eingerichtet ist, den PID-Wert durch ein Addieren des Proportionalwerts, des Integralwerts und des Differentialwerts abzuleiten.

4. Batteriesystem nach Anspruch 1, wobei
das Batteriemanagementsystem eine Laderaten-Karte umfasst, in welcher eine Laderate, welche jeder Temperatur einer Mehrzahl von Batteriepacks entspricht, für jeden einer Mehrzahl von Ladeziel-SOCs definiert ist, und dazu eingerichtet ist, die Ladeziel-SOCs und die Batteriepack-Temperatur zu empfangen, und die Laderate, welche den empfangenen Ladeziel-SOCs und der Batteriepack-Temperatur entspricht, aus der Laderaten-Karte abzuleiten.

5. Batteriesystem nach Anspruch 1, wobei
das Batteriemanagementsystem dazu eingerichtet ist, die OCV, welche dem Ladeziel-SOC entspricht, unter Verwendung einer SOC-zu-OCV-Konvertierungsfunktion zu generieren.

6. Batteriesystem nach Anspruch 1, wobei
das Batteriemanagementsystem dazu eingerichtet ist, die Fehlerspannung durch ein Subtrahieren der höchsten Zellspannung unter der Mehrzahl von Zellspannungen von der OCV zu generieren.

7. Batteriesystem nach Anspruch 1, wobei
in der Mehrzahl von Batteriezellen, wenn Batteriezellgruppen, in welchen Batteriezellen mit p parallelgeschaltet sind, mit s in Serie geschaltet sind, das Batteriemanagementsystem dazu eingerichtet ist, eine Modulations-Laderate zu generieren, indem die Kompensations-Laderate mit p multipliziert wird.

8. Ladesteuerungsverfahren des Batteriesystems nach Anspruch 1,
**dadurch gekennzeichnet, dass** das Verfahren umfasst:

   Ableiten (S1) einer Laderate auf der Grundlage eines Ladeziel-State of Charges (SOC) für den Batteriepack und einer Batteriepacktemperatur;
   Generieren (S2) einer Fehlerspannung zwischen einer der Mehrzahl von Zellspannungen und einer Leerlaufspannung (OCV), welche dem Ladeziel-SOC entspricht; und
   Generieren (S8) einer Kompensations-Laderate durch ein Kompensieren der Laderate mittels PID-Steuerung auf der Grundlage der Fehlerspannung.

9. Ladesteuerungsverfahren des Batteriepacks nach Anspruch 8, wobei
das Generieren der Kompensations-Laderate umfasst:

   Generieren eines Proportionalwerts, eines Integralwerts und eines Differentialwerts auf der Grundlage der Fehlerspannung;
   Ableiten eines PID-Werts durch Addieren des Proportionalwerts, des Integralwerts und des Differentialwerts; und
   Multiplizieren der Laderate mit dem PID-Wert, um die Kompensations-Laderate zu generieren.

10. Ladesteuerungsverfahren des Batteriepacks nach Anspruch 8, wobei das Ableiten der Laderate umfasst:

   Empfangen des Ladeziel-SOCs und der Batteriepack-Temperatur; und
   Ableiten der Laderate, welche dem empfangenen Ladeziel-SOC und der Batteriepack-Temperatur entspricht, aus einer Laderaten-Karte.

11. Ladesteuerungsverfahren des Batteriepacks nach Anspruch 8, ferner umfassend:
Generieren der OCV, welche dem Ladeziel-SOC entspricht, unter Verwendung einer SOC-zu-OCV-Konvertierungsfunktion.

12. Ladesteuerungsverfahren des Batteriepacks nach Anspruch 8, wobei das Generieren der Fehlerspannung umfasst:
Generieren der Fehlerspannung durch ein Subtrahieren der höchsten Zellspannung unter der Mehrzahl von Zellspannungen von der OCV.

13. Ladesteuerungsverfahren des Batteriepacks nach Anspruch 8, ferner umfassend,
in der Mehrzahl von Batteriezellen, wenn Batteriezellgruppen, in welchen Batteriezellen mit p parallelgeschaltet sind, mit s in Serie geschaltet sind, Generieren einer Modulations-Laderate, indem die Kompensations-Laderate mit p multipliziert wird.

**Revendications**

1. Système de batterie (1) comprenant :

   un bloc-batterie (10) comportant une pluralité de cellules de batterie (10_1 ;10_n) ; et
   un système de gestion de batterie (20) **caractérisé en ce qu'**il est configuré pour dériver un taux de chargement sur la base d'un SOC (état de charge) cible de chargement pour le bloc-batterie et de la température de bloc-batterie, compenser le taux de chargement par une commande PID sur la base d'une tension d'erreur entre l'une quelconque de la pluralité de tensions de cellule et une tension en circuit ouvert (OCV) correspondant au SOC cible de chargement pour générer un taux de chargement de compensation.

2. Système de batterie selon la revendication 1, dans lequel
   le système de gestion de batterie est configuré pour générer une valeur proportionnelle, une valeur intégrale et une valeur différentielle sur la base de la tension d'erreur pour dériver une valeur PID, et multiplier le taux de chargement par la valeur PID pour générer le taux de chargement de compensation.

3. Système de batterie selon la revendication 2, dans lequel
   le système de gestion de batterie est configuré pour dériver la valeur PID en additionnant la valeur proportionnelle, la valeur intégrale et la valeur différentielle.

4. Système de batterie selon la revendication 1, dans lequel
   le système de gestion de batterie comporte une carte de taux de chargement dans laquelle un taux de chargement correspondant à chaque température d'une pluralité de blocs-batteries est défini pour chacun d'une pluralité de SOC cibles de chargement, et est configuré pour recevoir les SOC cibles de chargement et la température de bloc-batterie, et dériver le taux de chargement correspondant aux SOC cibles de chargement reçus et à la température de bloc-batterie à partir de la carte de taux de chargement.

5. Système de batterie selon la revendication 1, dans lequel
   le système de gestion de batterie est configuré pour générer l'OCV correspondant au SOC cible de chargement en utilisant une fonction de conversion de SOC en OCV.

6. Système de batterie selon la revendication 1, dans lequel
   le système de gestion de batterie est configuré pour générer la tension d'erreur en soustrayant de l'OCV la tension de cellule la plus élevée parmi la pluralité de tensions de cellule.

7. Système de batterie selon la revendication 1, dans lequel

   dans la pluralité de cellules de batterie, lorsque des groupes de cellules de batterie dans lesquels des cellules de batterie sont connectées en parallèle avec p sont connectés en série avec s,
   le système de gestion de batterie est configuré pour générer un taux de chargement de modulation en multipliant le taux de chargement de compensation par p.

8. Procédé de commande de chargement du système de batterie selon la revendication 1, **caractérisé en ce que** le procédé comprend :

   la dérivation (S1) d'un taux de chargement sur la base d'un état de charge (SOC) cible de chargement pour le bloc-batterie et d'une température de bloc-batterie ;
   la génération (S2) d'une tension d'erreur entre l'une quelconque de la pluralité de tensions de cellule et une tension en circuit ouvert (OCV) correspondant au SOC cible de chargement ; et
   la génération (S8) d'un taux de chargement de compensation en compensant le taux de chargement par une commande PID sur la base de la tension d'erreur.

9. Procédé de commande de chargement du bloc-batterie selon la revendication 8, dans lequel
   la génération du taux de chargement de compensation comporte :

la génération d'une valeur proportionnelle, d'une valeur intégrale et d'une valeur différentielle sur la base de la tension d'erreur ;

la dérivation d'une valeur PID en additionnant la valeur proportionnelle, la valeur intégrale et la valeur différentielle ; et

la multiplication du taux de chargement par la valeur PID pour générer le taux de chargement de compensation.

**10.** Procédé de commande de chargement du bloc-batterie selon la revendication 8, dans lequel la dérivation du taux de chargement comporte :

la réception du SOC cible de chargement et de la température de bloc-batterie ; et

la dérivation du taux de chargement correspondant au SOC cible de chargement reçu et à la température de bloc-batterie à partir d'une carte de taux de chargement.

**11.** Procédé de commande de chargement du bloc-batterie selon la revendication 8, comprenant en outre la génération de l'OCV correspondant au SOC cible de chargement en utilisant une fonction de conversion de SOC en OCV.

**12.** Procédé de commande de chargement du bloc-batterie selon la revendication 8, dans lequel

la génération de la tension d'erreur comporte

la génération de la tension d'erreur en soustrayant de l'OCV la tension de cellule la plus élevée parmi la pluralité de tensions de cellule.

**13.** Procédé de commande de chargement du bloc-batterie selon la revendication 8, comprenant en outre,

dans la pluralité de cellules de batterie, lorsque des groupes de cellules de batterie dans lesquels des cellules de batterie sont connectées en parallèle avec p sont connectés en série avec s,

la génération d'un taux de chargement de modulation en multipliant le taux de chargement de compensation par p.

【Figure 1】

【Figure 2】

【Figure 3】

Receiving charging target SOC and battery pack temperature by charging rate derivation unit 21, and deriving charging rate cr1 from charging rate map based on charging target SOC and battery pack temperature ~S1

↓

Receiving charging target SOC by OCV conversion unit 22, and generating OCV corresponding to charging target SOC ~S2

↓

Generating error voltage ve by subtracting cell voltage vc from OCV by subtraction unit 23 ~S3

↓

Multiplying error voltage ve by a predetermined proportional parameter to generate proportional value pv by proportional unit 24 ~S4

↓

Multiplying result of integrating error voltage ve with respect to a time by integration parameter to generate integral value iv by integration unit 25 ~S5

↓

Generating differential value dv by multiplying differential parameter by result of differentiating error voltage ve with respect to a time by differential unit 26 ~S6

↓

Generating PID value by summing proportional value pv, integral value iv, and differential value dv by summing unit 27 ~S7

↓

Multiplying charging rate cr1 by PID value to generate compensation charging rate cr2 by multiplication unit 28 ~S8

【Figure 4】

【Figure 5】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020287390 A1
- US 2009104510 A1
- US 2020373779 A1
- CN 112234661 A